# EUROPÄISCHE PATENTSCHRIFT

(11) **EP 0 724 522 B1**
(45) Veröffentlichungstag und Bekanntmachung des Hinweises auf die Patenterteilung: **27.08.1997**
(21) Anmeldenummer: 94930955.3
(22) Anmeldetag: 15.10.1994
(51) Int. Cl.: B60K 17/00, B60K 5/12

(54) **TRIEBSTRANG MIT EINER ANTRIEBSMASCHINE, EINEM GETRIEBE UND EINER ACHSE FÜR EIN KRAFTFAHRZEUG**
MOTOR-VEHICLE DRIVE LINE WITH A DRIVE MOTOR, GEARBOX AND AXLE
TRANSMISSION COMPORTANT UN MOTEUR D'ENTRAINEMENT, UNE BOITE DE VITESSES ET UN ESSIEU POUR VEHICULE AUTOMOBILE

(30) Priorität: 20.10.1993 DE 4335756
(43) Veröffentlichungstag der Anmeldung: 07.08.1996
(73) Patentinhaber: ZF FRIEDRICHSHAFEN Aktiengesellschaft, 88038 Friedrichshafen (DE)
(72) Erfinder: LEBER, Fritz, D-88048 Friedrichshafen (DE); REBHOLZ, Wolfgang, D-88045 Friedrichshafen (DE); HUBER, Tilo, D-88046 Friedrichshafen (DE)
(74) Vertreter: Zietlow, Karl-Peter
(86) Internationale Anmeldenummer: EP9403403
(87) Internationale Veröffentlichungsnummer: WO9511141

(56) Entgegenhaltungen:
- DE-C- 976 276
- GB-A- 578 565
- GB-A- 2 035 235

## Beschreibung

Die Erfindung bezieht sich auf einen Triebstrang mit einer Antriebsmaschine, einem Getriebe und einer Achse für ein Kraftfahrzeug, wie im Oberbegriff des Anspruches 1 angegeben ist. Ein derartiger Triebstrang ist aus der GB-A 2 035 235 bekannt. Bei der bekannten Bauart von Kraftfahrzeugen, insbesondere Flurförderfahrzeugen, wie Gabelstapler, werden das Getriebe und die Achse getrennt im Rahmen aufgehängt bzw. befestigt. Eine Ausnahme hiervon bildet die Transaxle-Bauweise, bei der das Getriebe und die Achse einstückig ausgebildet sind.

In der Regel erfolgt die Drehmomentübertragung vom Getriebe zur Achse über eine Gelenkwelle. Wenn diese Gelenkwelle aus z. B. konstruktiven Gründen eine kurze Länge aufweist, wirken sich Abweichungen in den Befestigungspunkten der Aufhängung sehr stark auf die Gelenkwelle aus. Mehr oder weniger große Abweichungen sind nicht außergewöhnlich, da die Befestigungsstellen - wie der übrige Rahmen auch - als Schweißkonstruktionen ausgeführt sind.

Bei einer sogenannten Z-Anordnung der Gelenkwelle entstehen durch einen Achsversatz von wenigen Millimetern sofort große Beugewinkel, die die Gelenke sehr stark belasten. Zusätzliche Abweichungen stellen sich ein, wenn beispielsweise von der korrekten Einbaulage der Achse abgewichen wird. Wird die Achse beispielsweise um einen geringen Winkel gegenüber der Horizontalen und, bezogen auf das Getriebe, verdreht (verkippt) eingebaut, stellt sich ein zusätzlicher Fehlwinkel ein, der zu Ungleichförmigkeiten im Antriebsstrang führt. Diese Ungleichförmigkeiten verursachen lästige Geräusche.

Der Erfindung liegt die Aufgabe zugrunde, einen Antriebsstrang der eingangs genannten Gattung so zu gestalten, daß Abweichungen von der theoretisch korrekten Einbaulage praktisch ohne Rückwirkungen auf die Antriebswellen bleiben. Insbesondere sollen Ungleichförmigkeiten und hieraus resultierende Geräusche vermieden werden.

Die der Erfindung zugrunde liegende Aufgabe wird durch die im Kennzeichenteil des Anspruches 1 angegebenen Merkmale gelöst. Durch die relative Schwenkbeweglichkeit von Elementen des Antriebsstranges (Antriebsmaschine, Getriebe) gegenüber weiteren Elementen des Antriebsstranges (Achse) entsteht eine W-Anordnung der Gelenkwelle bzw. einer anderen gleichwertigen Gelenkverbindung (Doppelkreuzgelenk). Sämtliche in Längsrichtung des Triebstranges vorhandenen Abweichungen (Fehlstellungen) ergeben gleich große Beugewinkel an den Gelenken. Hierdurch werden Ungleichförmigkeiten im Antriebsstrang vermieden. Neben einer Verringerung der Belastung der Gelenke wird die Entwicklung unangenehmer Geräusche vermieden.

Die Schwenkachse liegt - gesehen in Seitenansicht des Triebstranges - mittig zu einer Gelenkwelle. Daher haben die Gelenke, die die An- und Abtriebswelle mit der Gelenkwelle verbinden, gleiche Abstände zur Schwenkachse.

Bei einer bevorzugten Ausführungsform verbindet die Gelenkwelle eine Ausgangswelle des Getriebes mit einer Eingangswelle eines Differentialgetriebes. Der Anschluß erfolgt über Gelenke. Anstelle einer kurzen Gelenkwelle kann auch ein Doppelkreuzgelenk Verwendung finden.

Bei einer bevorzugten konstruktiven Lösung verläuft die Schwenkachse durch die Zentren zweier Bolzen, die Bestandteil zweier Gelenke sind. Es ist vorteilhaft, wenn die Bolzen Gummielemente durchsetzen, um entstehende Geräusche zu dämpfen. Diese Gummielemente können in Lagerböcken oder auch in Lenkern angeordnet sein. Eine baulich einfache Gestaltung ergibt sich, wenn die Lagerböcke am Getriebe und die Lenker an der Achse befestigt sind. Die Lagerböcke bzw. die Lenker können als separate Bauteile ausgebildet sein. Bevorzugt sind sie einstückig mit dem Getriebe bzw. der Achse gefertigt.

Bei einer konstruktiv einfachen Lösung weisen die Lenker gabelförmige Enden auf, die von den Bolzen durchsetzt werden. Die Lagerböcke greifen in die U-förmigen Freiräume der gabelförmigen Enden der Lenker ein. Die Lagerböcke nehmen die Gummielemente auf, in denen die Bolzen abgestützt werden.

Um seitliche Fehlstellungen bei der Montage auszugleichen, beispielsweise wenn die Achse nicht exakt in Fahrzeugquerrichtung verläuft, sind die gegenüber der Achse schwenkbeweglich angeordneten Elemente des Antriebsstranges in einem zusätzlichen Gelenk abgestützt.

Axiale Verschiebungen, die aus unterschiedlichen Beugewinkeln an der Gelenkwelle resultieren, werden durch Veränderung der wirksamen Länge der Ausgangswelle des Getriebes bzw. der Eingangswelle des Differentialgetriebes kompensiert. Hierzu bestehen konstruktiv mehrere Möglichkeiten. Beispielsweise kann der Flansch der Ausgangswelle des Getriebes über eine Mitnahmeverzahnung auf der Ausgangswelle drehfest, aber axial verschieblich, gelagert sein.

Weitere für die Erfindung wesentliche Merkmale sowie die daraus resultierenden Vorteile sind der nachfolgenden Beschreibung eines Ausführungsbeispiels zu entnehmen.
Es zeigen:
- Fig. 1: eine stark vereinfachte, schematische Seitenansicht eines Triebstranges bei idealen Einbauverhältnissen;
- Fig. 2: eine schematische, stark vereinfachte Darstellung eines Triebstranges, bei dem eine Achse verdreht eingebaut wurde;
- Fig. 3: die vereinfachte Seitenansicht eines konstruktiv ausgeführten Ausführungsbeispiels eines Triebstranges und
- Fig. 4: die Draufsicht auf den Triebstrang nach Fig. 3.

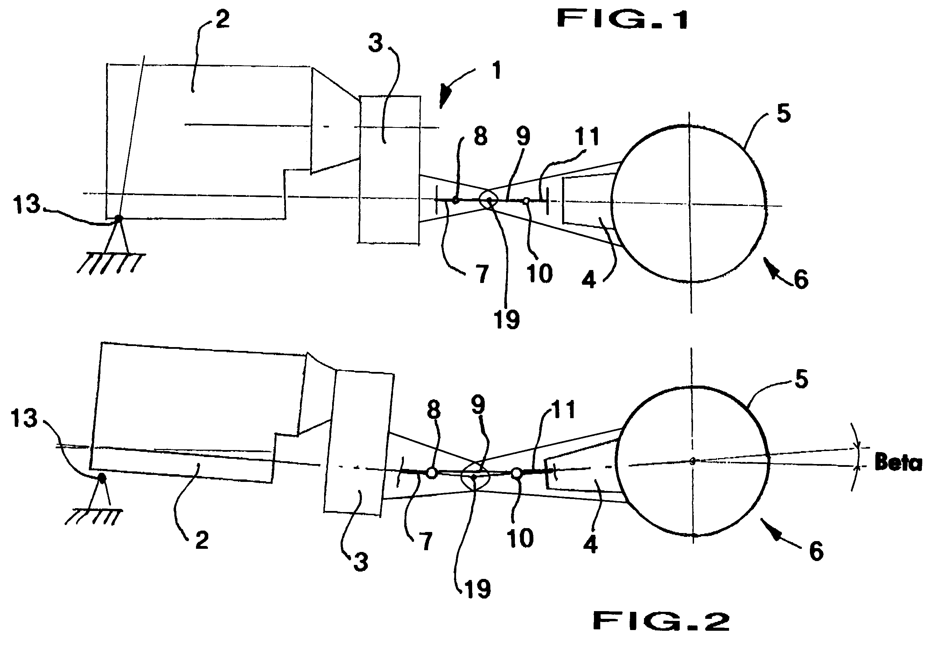

Der in Fig. 1 in stark vereinfachter, schematischer Seitenansicht abgebildete Triebstrang 1 setzt sich aus Elementen zusammen, die folgende Anforderungen erfüllen: sie ermöglichen das Anfahren, das Wandeln von Drehmoment und Drehzahl, sie ermöglichen unterschiedliche Drehrichtungen für Vorwärts- und Rückwärtsfahrt, sie übertragen Zug- und Schubkräfte, sie lassen unterschiedliche Drehzahlen der Antriebsräder bei Kurvenfahrt zu und sie erlauben einen Betrieb einer Antriebsmaschine 2 im Verbrauchs- und Abgasoptimum des Kennfeldes.

Stillstand, Anfahren und Kraftunterbrechung werden durch Betätigung einer Kupplung ermöglicht, die selbst nicht dargestellt ist. Das Motordrehmoment und die -drehzahlen werden in einem Getriebe 3 entsprechend dem Zugkraftbedarf eines selbst nicht dargestellten Fahrzeugs gewandelt. Für den Ausgleich der unterschiedlichen Achs- und Raddrehzahlen bei Kurvenfahrt und für gleichmäßige Verteilung des Antriebsmomentes sorgt ein Differentialgetriebe 4, das in einem Achsmittengehäuse 5 einer schematisch angeordneten Achse 6 angeordnet ist.

Eine Ausgangswelle 7 des Getriebes 3 ist über ein Gelenk 8 mit einer (kurzen) Gelenkwelle 9 drehfest und gelenkig verbunden. Die Gelenkwelle 9 ist über ein Gelenk 10 mit einer Eingangswelle 11 des Differentialgetriebes 4 ebenfalls drehbar und gelenkig verbunden.

Aus der Schemazeichnung nach Fig. 1 ist ersichtlich, daß, ideale Verhältnisse vorausgesetzt, die Ausgangswelle 7, die Gelenkwelle 9 und die Eingangswelle 11 des Differentialgetriebes 4 eine Strecklage einnehmen. Diese idealen Einbauverhältnisse vorausgesetzt, trifft dieser Sachverhalt auch für die Anordnung, gesehen in Draufsicht, zu.

Bei der Drehmomentübertragung im Triebstrang 1 zwischen dem Getriebe 3 und der Achse 6 können sich Fehler bei der Aufhängung der Elemente des Triebstranges (insbesondere der Antriebsmaschine, des Getriebes und der Achse) sehr stark auf die Gelenkwelle 9 auswirken. Bei einer üblichen Z-Anordnung der Gelenkwelle entstehen durch schon geringfügige Achsabweichungen von wenigen Millimetern sofort große Beugewinkel, die die Gelenke 8 und 10 sehr stark belasten. Erschwerend tritt hinzu, daß bei einem verkippten Einbau der Achse 6 gegenüber dem Getriebe 3 zusätzlich ein Fehlwinkel auftritt, der zu Ungleichförmigkeiten im Triebstrang führt. Diese Ungleichförmigkeiten verursachen unerwünschte Geräusche.

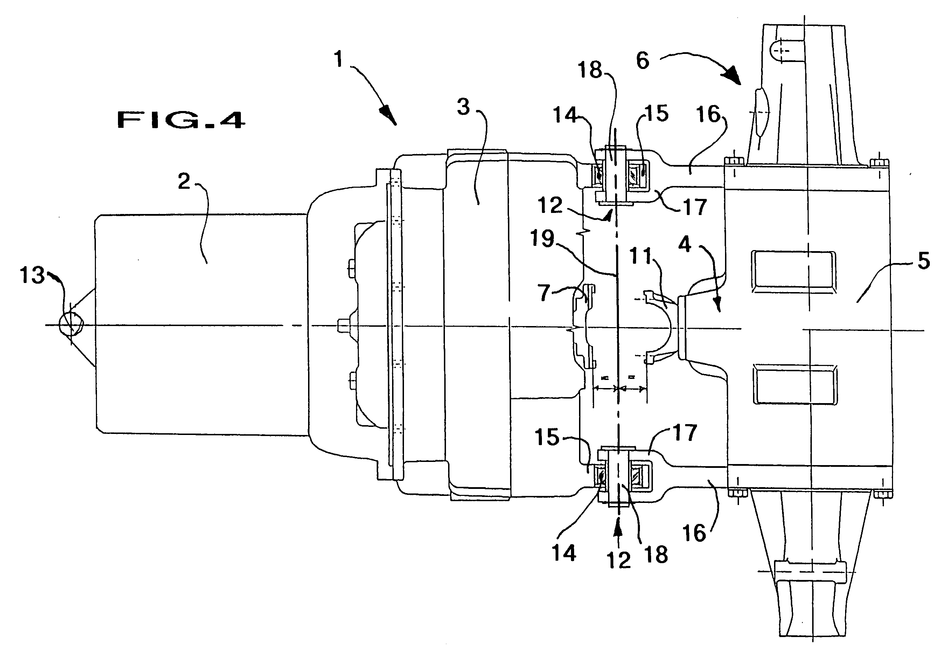

Aus der Abbildung nach Fig. 1 ist ersichtlich, daß das Getriebe 3 mit der Achse 6 über mindestens ein Gelenk 12 verbunden ist. Bei einer bevorzugten Ausführungsform (vergleiche insbesondere Fig. 4) werden zwei derartige Gelenke 12 verwendet, die eine in Fahrzeugquerrichtung verlaufende Schwenkachse definieren. Um diese Schwenkachse können die Elemente des Antriebsstranges, wie die Antriebsmaschine und das direkt angeflanschte Getriebe, als Baueinheit schwenken.

Durch ein drittes Gelenk 13 wird die Aufhängung des Triebstranges vervollständigt. Das dritte Gelenk 13 kann am Getriebe 3 oder an der Antriebsmaschine 2 vorgesehen sein. Das dritte Gelenk 13 kompensiert Fehlabweichungen in seitlicher Richtung (beispielsweise Fehler, die entstehen, wenn die Achse nicht exakt quer zur Fahrtrichtung eingebaut ist).

Bei dem Triebstrang nach Fig. 1 stützen sich die Elemente Antriebsmaschine 2 und Getriebe 3 im Gelenk 13 und direkt in der Achse 6 ab. Die Gelenke 12 befinden sich - gesehen in Seitenansicht - mittig zwischen den Gelenken 8 und 10, so daß die Abstände zwischen den Gelenken 8 und 12 und 10 und 12 gleich groß sind (vergleiche Fig. 4).

Wenn nun, wie dies in der Schemazeichnung nach Fig. 2 veranschaulicht ist, die Achse - abweichend vom Idealzustand nach Fig. 1 - um einen Winkel Beta verdreht eingebaut wurde (Fehlwinkel durch Fertigungstoleranzen), entsteht eine sogenannte W-Anordnung der Gelenkwelle 9. Bei der W-Anordnung schneidet sich die Ausgangswelle 7 (Antriebswelle) und die Eingangswelle 11 (Abtriebswelle) in einer Ebene. Diese Anordnung hat den Vorteil, daß sich sämtliche Winkelabweichungen in Längsrichtung des Triebstranges als gleich große Beugewinkel (vertikale Winkelabweichungen der Abtriebswelle 7 und der Eingangswelle 11 gegenüber der Gelenkwelle 9) an den Gelenken 8 und 10 einstellen. Die Fehler in seitlicher Richtung werden durch das Gelenk 13 ausgeglichen. Die W-Anordnung hat den Vorteil, daß unvermeidbare Fertigungstoleranzen, also Fehler an den Befestigungsstellen der Aufhängung der Antriebsmaschine, des Getriebes und der Achse, keine Ungleichförmigkeiten im Antriebsstrang herbeiführen. Die Beugewinkel in den Gelenken verändern sich nur wenig, so daß die Gelenke nicht übermäßig belastet werden. Geräusche werden vermieden, da keine Ungleichförmigkeiten im Antriebsstrang auftreten. Anstelle einer Gelenkwelle 9 kann auch ein Doppelkreuzgelenk verwendet werden.

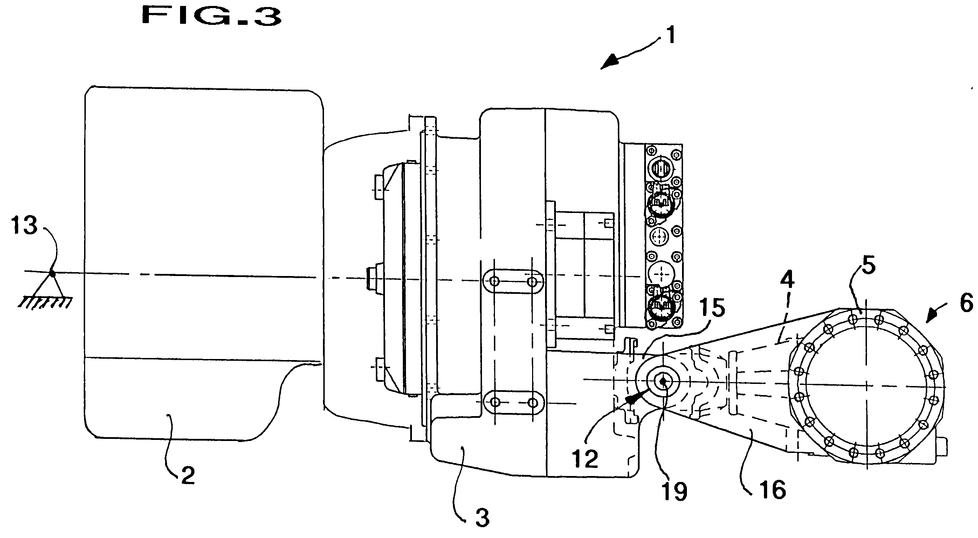

In Fig. 3 ist ein konstruktiv bearbeitetes Ausführungsbeispiel in seinen Umrissen - gesehen in Seitenansicht - gezeichnet. Bei der Antriebsmaschine 2 kann es sich beispielsweise um einen Dieselmotor handeln. Das Getriebe 3 kann beispielsweise ein Lastschaltgetriebe mit einem hydrodynamischen Wandler sein.

Die Gelenke 12 werden getriebeseitig durch Gummielemente 14 ergänzt, die in Lagerböcken 15 gelagert sind. Die Lagerböcke 15 können einstückig mit dem Gehäuse des Getriebes 3, zum Beispiel durch direktes Angießen, hergestellt sein. Möglich ist es aber auch, sie als separate Bauteile anzubringen.

Achsseitig sind am Gehäuse des Differentialgetriebes 4 ebenfalls Lagerböcke, zum Beispiel in Form von Lenkern 16, vorgesehen. Auch diese Lenker können einstückig mit dem Gehäuse des Differentialgetriebes 4 oder auch mit den Achsrohren hergestellt sein. Die Lenker 16 sind an ihren freien Enden gabelförmig ausgebildet. Die gegabelten Enden 17 werden von Bolzen 18 durchsetzt; die Gummielemente 14 stützen sich auf diesen Bolzen 18 über geeignete Lagerbuchsen ab. Durch die Zentren der Bolzen 18 verläuft die strichpunktiert eingezeichnete Schwenkachse 19, um die eine Schwenkbewegung der Elemente 2 und 3 des Triebstranges 1 möglich ist. Seitliche Abweichungen werden durch den dritten Auflagepunkt 13 ausgeglichen. Zur Kompensation von Fehlern in seitlicher Richtung durch den dritten Auflagepunkt 13 kön nen ebenfalls in vorteilhafter Weise Gummielemente Verwendung finden.

Es ist selbstverständlich möglich, die gezeigte Anordnung in der Weise umzukehren, daß die Lenker 16 Bestandteil des Getriebegehäuses 3 und die Lagerböcke 15 Bestandteil der Achse 6 sind. Die Verwendung von Gummielementen ist nicht zwingend erforderlich. Sie ist jedoch vorteilhaft, um die Übertragung von Geräuschen zu dämpfen.

Aus der Draufsicht nach Fig. 4 ist ersichtlich, daß der Abstand zwischen dem Flansch der Ausgangswelle 7 und dem Flansch der Eingangswelle 11 des Differentialgetriebes 4 zur Schwenkachse 19 gleich ist. Bedingt durch unterschiedlich große Beugungswinkel im Triebstrang (Ausgangswelle 7, Gelenkwelle 9 und Eingangswelle 11) entstehen axiale Längenveränderungen. Derartige Axialverschiebungen müssen ausgeglichen werden. Vorzugsweise ist der Flansch der Ausgangswelle 7 des Getriebes axial verschiebbar gelagert. Alternativ hierzu ist es jedoch auch möglich, den Flansch bzw. die Eingangswelle 11 des Differentialgetriebes 4 axial verschiebbar zu lagern. Anstelle der kurzen Gelenkwelle 9 könnte auch eine andere geeignete Gelenkverbindung eingesetzt werden. Beispielsweise ist die Verwendung eines Doppelkreuzgelenkes möglich.

### Bezugszeichen

- 1: Triebstrang
- 2: Antriebsmaschine
- 3: Getriebe
- 4: Differentialgetriebe
- 5: Achsmittengehäuse
- 6: Achse
- 7: Ausgangswelle
- 8: Gelenk
- 9: Gelenkwelle
- 10: Gelenk
- 11: Eingangswelle
- 12: Gelenk
- 13: Gelenk
- 14: Gummielemente
- 15: Lagerböcke
- 16: Lenker
- 17: gegabeltes Ende
- 18: Bolzen
- 19: Schwenkachse

## Patentansprüche

1. Triebstrang (1) mit einer Antriebsmaschine (2), einem Getriebe (3) und einer Achse (6) für ein Kraftfahrzeug, einer Gelenkwelle (9), die eine Ausgangswelle (7) des Getriebes (3) mit einer Eingangswelle (11) eines Differentialgetriebes (4) über Gelenke (8, 10) verbindet, wobei die Antriebsmaschine (2) und das Getriebe (3) um eine Schwenkachse (19) schwenkbeweglich angeordnet sind, welche - gesehen in Seitenansicht des Triebstranges - mittig zur Gelenkwelle (9) liegt, dadurch **gekennzeichnet,** daß die Antriebsmaschine (2) und das Getriebe (3) in einem zusätzlichen Gelenk (13), das Abweichungen des Triebstranges in seitlicher Richtung aufnimmt, abgestützt sind.

2. Triebstrang nach Anspruch 1, dadurch **gekennzeichnet,** daß die Verbindung über ein Doppelkreuzgelenk erfolgt.

3. Triebstrang nach Anspruch 1, dadurch **gekennzeichnet,** daß die Schwenkachse (19) durch die Zentren zweier Bolzen (18) verläuft, die Bestandteil zweier Gelenke (12) sind.

4. Triebstrang nach Anspruch 3, dadurch **gekennzeichnet,** daß die Bolzen (18) der Gelenke (12) Gummielemente (14) durchsetzen, die in Lagerböcken (15) bzw. Lenker (16) angeordnet sind.

5. Triebstrang nach Anspruch 1, dadurch **gekennzeichnet,** daß Lagerböcke (15) bzw. Lenker (16) am Getriebe (3) bzw. der Achse (6) befestigt sind.

6. Triebstrang nach Anspruch 5, dadurch **gekennzeichnet,** daß die Lagerböcke (15) einstückig mit dem Getriebe (3) bzw. der Achse (6) hergestellt sind.

7. Triebstrang nach Anspruch 5, dadurch **gekennzeichnet,** daß die Lenker (16) einstückig mit der Achse (6) bzw. dem Getriebe (3) hergestellt sind.

8. Triebstrang nach einem der Ansprüche 1, 3 oder 4, dadurch **gekennzeichnet,** daß die Lenker (16) gabelförmige Enden (17) aufweisen, die von den Bolzen (18) durchsetzt sind.

9. Triebstrang nach einem der Ansprüche 5 oder 8, dadurch **gekennzeichnet,** daß die Lagerböcke (15) - gesehen in Draufsicht - in die U-förmigen Freiräume der gabelförmigen Enden (17) eingreifen.

## Claims

1. Drive train (1) having a drive motor (2), a gearbox (3) and an axle (6) for a motor vehicle, a propeller shaft (9) connecting an output shaft (7) of the gearbox (3) to an input shaft (11) of a differential gearbox (4) via joints (8, 10), the drive motor (2) and the gearbox (3) being so arranged as to be capable of pivoting about a pivot shaft (19) which - viewed from the side of the drive train - is situated at the centre of the propeller shaft (9), characterised in that the drive motor (2) and the gearbox (3) are supported in an additional joint (13) absorbing lateral deviations of the drive train.

2. Drive train according to Claim 1, characterised in that the connection is effected by means of a universal joint.

3. Drive train according to Claim 1, characterised in that the pivot shaft (19) passes through the centres of two bolts (18) pertaining to two joints (12).

4. Drive train according to Claim 3, characterised in that the bolts (18) of the joints (12) pass through rubber elements (14) arranged in bearing brackets (15) and links (16), respectively.

5. Drive train according to Claim 1, characterised in that bearing brackets (15) and links (16), respectively, are secured to the gearbox (3) and the axle (6), respectively.

6. Drive train according to Claim 5, characterised in that the bearing brackets (15) are made integral with the gearbox (3) and the axle (6), respectively.

7. Drive train according to Claim 5, characterised in that the links (16) are made integral with the axle (6) and the gearbox (3), respectively.

8. Drive train according to one of Claims 1, 3 or 4, characterised in that the links (16) comprise forked ends (17) through which pass the bolts (18).

9. Drive train according to one of Claims 5 or 8, characterised in that - viewed from above - the bearing brackets (15) engage the U-shaped free spaces of the forked ends (17).

## Revendications

1. Ligne d'entraînement (1) comportant un moteur d'entraînement (2) une boîte de vitesses (3) et un arbre (6) pour un véhicule automobile, un arbre à cardan (9) qui couple l'arbre de sortie (7) de la boîte de vitesses (3) avec un arbre d'entrée (11) d'une boîte de différentiel (4) par l'intermédiaire d'articulations (8, 10), dans laquelle le moteur d'entraînement (2) et la boîte de vitesses (3) sont montés de façon pivotante sur un axe articulé (19), qui - vue du côté de la ligne d'entraînement - est disposé au milieu de l'arbre à cardan (9), **caractérisée en ce que** le moteur d'entraînement (2) et la boîte de vitesse (3) sont soutenus par une articulation supplémentaire (13) qui absorbe les déplacements latéraux de la ligne d'entraînement.

2. Ligne d'entraînement selon la revendication 1, **caractérisée en ce que** la liaison s'effectue au moyen d'un joint à double cardan.

3. Ligne d'entraînement selon la revendication 1, **caractérisée en ce que** l'axe articulé (19) passe par le centre de deux goupilles (18) qui constituent des composants de deux articulations (12).

4. Ligne d'entraînement selon la revendication 3, **caractérisée en ce que** les goupilles (18) des articulations (12) traversent des éléments en caoutchouc (14) qui sont montés dans des supports de paliers (15), respectivement des bras de liaison (16).

5. Ligne d'entraînement selon la revendication 1, **caractérisée en ce que** les supports de paliers (15), respectivement les bras de liaison (16) sont fixés sur la boîte de vitesses (3), respectivement sur l'arbre (6).

6. Ligne d'entraînement selon la revendication 5, **caractérisée en ce que** les supports de paliers (15) sont réalisés d'une pièce avec la boîte de vitesses (3), respectivement avec l'arbre (6).

7. Ligne d'entraînement selon la revendication 5, **caractérisée en ce que** les bras de liaison (16) sont réalisés d'une pièce avec l'arbre (6), respectivement avec la boîte de vitesses (3).

8. Ligne d'entraînement selon l'une des revendications 1, 3 ou 4, **caractérisée en ce que** les bras de liaison (16) présentent des extrémités en forme de fourche (17) qui sont traversées par les goupilles (18).

9. Ligne d'entraînement selon l'une des revendications 5 ou 8, **caractérisée en ce que** les supports de paliers (15) - vus de dessus - sont engagés dans les espaces libres en forme de U des extrémités en forme de fourche (17).
